# EUROPEAN PATENT SPECIFICATION

(11) **EP 3 950 964 B1**
(45) Date of publication and mention of the grant of the patent: **13.08.2025**
(21) Application number: 20781955.8
(22) Date of filing: 17.03.2020
(51) Int. Cl.: C09D 11/36, C09D 11/10, C14C 11/00, D06N 3/00, B41M 5/00

(54) **INK COMPOSITION, INK JET RECORDING METHOD USING SAME, AND METHOD FOR PRODUCING PRINTED MATTER**
TINTENZUSAMMENSETZUNG, TINTENSTRAHLAUFZEICHNUNGSVERFAHREN DAMIT UND VERFAHREN ZUR HERSTELLUNG VON DRUCKERZEUGNISSEN
COMPOSITION D'ENCRE, PROCÉDÉ D'ENREGISTREMENT À JET D'ENCRE METTANT EN OEUVRE CELLE-CI, ET PROCÉDÉ DE FABRICATION D'OBJET IMPRIMÉ

(30) Priority: 29.03.2019 JP 2019069285
(43) Date of publication of application: 09.02.2022
(73) Proprietor: DNP Fine Chemicals Co., Ltd., Yokohama-shi, Kanagawa 226-0022 (JP)
(72) Inventor: YAMAZAKI, Fumie, Yokohama-shi, Kanagawa 226-0022 (JP); SHIRAISHI, Naoki, Yokohama-shi, Kanagawa 226-0022 (JP); OTOMO, Kentaro, Yokohama-shi, Kanagawa 226-0022 (JP); FUJIOKA, Yuuko, Yokohama-shi, Kanagawa 226-0022 (JP)
(74) Representative: Winter, Brandl - Partnerschaft mbB
(86) International application number: PCT/JP2020/011620
(87) International publication number: WO 2020/203244

(56) References cited:
- EP-A1- 3 112 428
- EP-A1- 3 199 598
- EP-A2- 3 199 600
- CN-A- 106 046 940
- JP-A- 2009 114 398
- JP-A- 2017 186 494
- US-A1- 2013 286 117
- US-A1- 2014 333 696

## Description

### TECHNICAL FIELD

The present invention relates to a use of an ink composition to discharge the ink composition onto a surface of a leather substrate by an ink jet method.

### BACKGROUND ART

As ink compositions, waterborne ink compositions in which various water-soluble dyes are dissolved in water or a mixed solution of water and an organic solvent, or active energy ray-curable ink compositions which are cured by an active energy ray such as ultraviolet rays have been widely used.

These ink compositions may be used as a means for surface cosmetics of leather substrates including a natural leather or a synthetic leather. For example, WO 2008 / 044 515 A discloses a technique relating to a natural leather in which a three-dimensional pattern made of a resin is formed to partially coat a surface of the natural leather in a shape of pattern, and under which an undercoat layer is formed. WO 2008 / 044 515 A discloses to the effect that such a natural leather permits a minute three-dimensional expression including small dots and thin lines, is capable of retaining the three-dimensional pattern even with the lapse of time, and maintains characteristics peculiar to the natural leather.

JP 2008 - 280 449 A discloses technique relating to leather which is formed by two types of ultraviolet curable films having different Martens hardness. JP 2008 - 280 449 A describes that such leather is excellent in abrasion resistance and can follow tension without occurrence of cracks in the cured film.

US 2014 / 333 696 A1 relates to an ink composition for ink jet recording, which however is applied to a low-absorptive recording medium being composed of a base material and a layer containing a low-absorptive material disposed on the surface of the base material.

### DISCLOSURE OF THE INVENTION

### Problems to be Solved by the Invention

When an undercoat layer is formed on a leather substrate in order to apply a surface decoration on the leather substrate, a step of forming the undercoat layer must be provided, resulting in a lowered working efficiency. In addition, the undercoat layer may change the texture of the leather substrate, whereby designability may be lowered in some cases.

In addition, when two types of ultraviolet curable films having different hardness are formed, a step of forming the two types of cured films must be provided, resulting in lowered working efficiency. Moreover, the ultraviolet-curable film is inherently less flexible even though it had some followability, and it was difficult to apply the ultraviolet-curable film in practical use.

In view of the above circumstances, the present invention has been made and it is an object of the present invention to provide an ink composition that can be used on a leather substrate, that forms an ink film having a higher abrasion resistance and flexibility, and that can form a clearer image on the leather substrate.

### Means for Solving the Problems

This object is solved by the subject matter of the independent claim. Further aspects are disclosed in the subclaim. In order to solve the above problems, the present inventors have undertaken extensive research and found that the above problems can be solved by an ink composition including a coloring material, a resin, and a predetermined solvent, and have completed the present invention.

### Effects of the Invention

The ink composition for the use of the present invention is an ink composition that is used on a leather substrate, that forms an ink film having a higher abrasion resistance and flexibility, and that can form a clearer image on the leather substrate.

### PREFERRED MODE FOR CARRYING OUT THE INVENTION

Hereinafter, specific embodiments of the present invention will be described in detail, but the present invention is not limited to the following embodiments in any way, and can be implemented within the scope of the object of the present invention with appropriate modifications.

### <Ink Composition>

An ink composition of an embodiment of the use of the present invention is an ink composition including at least a coloring material, a resin, and a solvent represented by the following general formula (1):

R₁-(OR₂)ₙ-O- R₃ (1)

in which n: an integer 1 or more and 4 or less,
R₁: an optionally branched alkyl group having 1 or more and 8 or less carbon atoms,
R₂: an optionally branched alkylene group having 1 or more and 4 or less carbon atoms, and
R₃: hydrogen or an optionally branched alkyl group having 1 or more and 4 or less carbon atoms.

More specifically, it is an ink composition including no water and including an organic solvent as a main component. Note that "including no water" means that the ink composition is an ink composition produced without intentionally blending water, and does not consider water which is contained due to a cause not intended by a manufacturer, such as water vapor or the like contained in the atmosphere or the like or water contained in an additive, for example.

According to the viewpoint of the present inventors, as long as it is an ink composition including a predetermined organic solvent as a main component, the predetermined organic solvent can impart an ink composition with an ability to attack a leather substrate, whereby, whereby the ink composition slightly erodes a surface of the leather substrate, so that the coloring material included in the ink composition can be attached to the surface of the leather substrate. Further, since this attack property of the organic solvent is not so strong, the texture of the leather substrate does not change due to excessive erosion of the leather substrate.

Hereinafter, the solvent represented by the general formula (1) included in the ink composition of the present embodiment, the coloring material, and other additives will be described.

### [Solvent]

The solvent represented by the general formula (1) relating to the ink of the present embodiment is an alkylene glycol alkyl ether represented by the following general formula (1):

R₁-(OR₂)ₙ-O-R₃ (1)

in which n: an integer of 1 or more and 4 or less,
R₁: an optionally branched alkyl group having 1 or more and 8 or less carbon atoms,
R₂: an optionally branched alkylene group having 1 or more and 4 or less carbon atoms, and
R₃: hydrogen or an optionally branched alkyl group having 1 or more and 4 or less carbon atoms.

Note that R₁ is preferably an optionally branched alkyl group having 1 or more and 4 or less carbon atoms. R₂ is preferably an optionally branched alkylene group having 1 or more and 2 or less carbon atoms. R₃ is preferably hydrogen or an optionally branched alkyl group having 1 or more and 2 or less carbon atoms.

As the solvent represented by the general formula (1) which can be included in the ink composition of the present embodiment, for example, the following can be mentioned: alkylene glycol monoalkyl ethers, such as ethylene glycol mono-n-butyl ether, ethylene glycol mono-isobutyl ether, ethylene glycol mono-t-butyl ether, ethylene glycol mono-2-ethylhexyl ether, diethylene glycol monomethyl (or ethyl, propyl, isopropyl, n-butyl, isobutyl, t-butyl, 2-ethylhexyl) ether, triethylene glycol monomethyl (or ethyl, propyl, isopropyl, n-butyl, isobutyl, t-butyl, 2-ethylhexyl) ether, tetraethylene glycol monomethyl ether, propylene glycol mono-n-butyl ether, propylene glycol mono-isobutyl ether, propylene glycol mono-t-butyl ether, propylene glycol mono-2-ethylhexyl ether, dipropylene glycol monomethyl (or ethyl, propyl, isopropyl, n-butyl, isobutyl, t-butyl, 2-ethylhexyl) ether, tripropylene glycol monomethyl (or ethyl, propyl, isopropyl, n-butyl, isobutyl, t-butyl) ether, tetrapropylene glycol monomethyl ether, etc.; and dialkyl ethers of polyhydric alcohols, such as ethylene glycol dibutyl ether, ethylene glycol dipropyl ether, diethylene glycol dimethyl ether, diethylene glycol diethyl ether, diethylene glycol methyl ethyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, tripropylene glycol dimethyl ether, tripropylene glycol diethyl ether, tripropylene glycol ethyl methyl ether, etc.

From the viewpoint of compatibility with the resin in the ink composition, permeability into the leather substrate onto which the ink is discharged, leveling property and drying property on the surface of the leather substrate, the following are preferred: diethylene glycol dimethyl ether, diethylene glycol diethyl ether, diethylene glycol ethyl methyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, tripropylene glycol dimethyl ether, tripropylene glycol ethyl methyl ether, etc.

Further, the solvent for the use of the present invention is a mixed solvent of two or more types thereof. The ink composition includes a first organic solvent having a flash point of 70°C or less and being represented by general formula (I), and a second organic solvent having a flash point of 90°C or more and being represented by general formula (I). By including such a first organic solvent and a second organic solvent, it is possible to make the drying property of the ink composition and the wetting and spreading property of the ink composition in the leather substrate preferable. In particular, the ink composition of the present embodiment is used for leather substrates, and includes the first organic solvent having a flash point of 70°C or less and the second organic solvent having a flash point of 90°C or more in predetermined amounts, whereby a drying speed of the ink composition is controlled, so that the ink composition is present as a liquid on the leather substrate for a certain period of time. By including a plurality of organic solvents each being represented by the general formula (I) and having different flash points as described above, it is possible to impart an attack property by which the ink composition more effectively attacks the leather substrate, whereby the coloring material included in the ink composition can be more effectively attached to the surface of the leather substrate. In addition, since this ink composition includes the first organic solvent having a flash point of 70°C or less, the ink composition dries after a predetermined time has elapsed, whereby the leather substrate is not overly eroded by the attack property to the leather substrate and the texture of the leather substrate does not change.

Examples of the first organic solvent include: diethylene glycol methyl ethyl ether, diethylene glycol dimethyl ether, dipropylene glycol dimethyl ether, diethylene glycol isopropyl methyl ether, etc. Examples of the second organic solvent include: diethylene glycol butyl methyl ether, tetraethylene glycol monobutyl ether, diethylene glycol monomethyl ether, diethylene glycol monoethyl ether, diethylene glycol monobutyl ether, diethylene glycol monoisopropyl ether, diethylene glycol monohexyl ether, diethylene glycol dibutyl ether, dipropylene glycol monopropyl ether, dipropylene glycol monobutyl ether, triethylene glycol monomethyl ether, triethylene glycol monobutyl ether, triethylene glycol dimethyl ether, tripropylene glycol monomethyl ether, tripropylene glycol monobutyl ether, tripropylene glycol dimethyl ether, tetraethylene glycol dimethyl ether, etc.

The ink composition of the present embodiment may include a solvent other than the solvent represented by the general formula (1), as required. For example, the ink composition of the present embodiment may include a heterocyclic compound such as a cyclic ester-based solvent or a cyclic amide-based solvent, or an amide-based solvent which includes, in the molecular structure, one carboxylic amide structure and an ether bond in a linear alkyl structure.

As the cyclic ester-based solvent, a lactone-based solvent such as γ-butyrolactone, β-propiolactone, γ-caprolactone, or ε-caprolactone may be exemplified. Note that the cyclic ester-based solvent may be a mixed cyclic ester obtained by mixing two or more types thereof.

Examples of the lactone-based solvent include γ-butyrolactone, γ-valerolactone, γ-hexalactone, γ-heptalactone, γ-octalactone, γ-nonalactone, γ-decalactone, γ-undecalactone, δ-valerolactone, δ-hexalactone, δ-heptalactone, δ-octalactone, δ-nonalactone, δ-decalactone, δ-undecalactone, ethylene carbonate, propylene carbonate, etc.

Examples of the cyclic amide-based solvent include α-, β-, γ-, δ-, ε-lactams, 2-pyrrolidone, N,N'-dimethylimidazolidinone, N-methylpyrrolidone, N-ethylpyrrolidone, etc.

Examples of the amide-based solvent include β-methoxypropionamide, β-butoxypropionamide, 3-methoxy-N,N-dimethylpropanamide, 3-butoxy-N,N-dimethylpropanamide, etc.

The cyclic ester-based solvent, the cyclic amide-based solvent, and the amide-based solvent have particularly high permeability to a printed surface mainly composed of a vinyl chloride-based polymer, and improve printing drying property, image reproducibility of fine lines, and abrasion resistance. In addition, there is also another advantage in that the drying property is relatively slow and fluidity, discharge responsiveness, and intermittent discharge stability of the ink are improved.

The content of the cyclic ester-based solvent, the cyclic amide-based solvent, or the amide-based solvent is preferably 5% by mass or more, and more preferably 10% by mass or more, with respect to the total amount of the ink composition. The content of the cyclic ester-based solvent is preferably 30% by mass or less, and more preferably 20% by mass or less, with respect to the total amount of the ink composition. When the content of the cyclic ester-based solvent is within the above range, a part of the surface of the leather substrate can be dissolved and the ink composition can more effectively penetrate into the inside of the leather substrate.

As a solvent other than the solvent represented by the general formula (1), the cyclic ester-based solvent, and the amide-based solvent, mainly, those conventionally used in the ink composition can be appropriately selected and used within a range not impairing the performance of the ink composition for the use of the present invention.

### [Resins]

The ink composition of the present embodiment includes a resin (binder resin). By the ink composition including a resin, water resistance of the printed matter is improved. The resin is not particularly limited and the following resins and copolymer resins or mixtures thereof may be used: acrylic resins, polystyrene resins, polyester resins, polyvinyl chloride resins, vinyl acetate resins, vinyl chloride-vinyl acetate copolymer resins, polyethylene resins, urethane resins, rosin-modified resins, phenolic resins, terpene resins, polyamide resins, a vinyltoluene-α-methylstyrene copolymer, an ethylene-vinyl acetate-based copolymer, cellulose acetate butyrate, silicone resins, acrylamide resins, and epoxy resins.

In the ink composition of the present embodiment, it is above all preferable that the ink composition includes an acrylic resin, because it improves the discharge responsiveness during high-speed printing and can improve the discharge stability, the water resistance and the solvent resistance.

The acrylic resin is not particularly limited as long as it contains a monomer constituting a (meth)acrylate ester as a main component. The acrylic resin is not particularly limited as long as it contains a monomer constituting a (meth)acrylate ester as a main component. As the (meth)acrylic ester monomer, known compounds can be used, and monofunctional (meth)acrylic esters can be preferably used. For example, alkyl (meth)acrylate, aralkyl (meth)acrylate, alkoxyalkyl (meth)acrylate, etc. may be mentioned. Specifically, the following (meth)acrylates may be mentioned: methyl (meth)acrylate, ethyl (meth)acrylate, n-propyl (meth)acrylate, isopropyl (meth)acrylate, n-butyl (meth)acrylate, sec-butyl (meth)acrylate, isobutyl (meth)acrylate, tert-butyl (meth)acrylate, pentyl (meth)acrylate, neopentyl (meth)acrylate, hexyl (meth)acrylate, 2-ethylhexyl (meth)acrylate, octyl (meth)acrylate, isooctyl (meth)acrylate, nonyl (meth)acrylate, isononyl (meth)acrylate, dodecyl (meth)acrylate, tridecyl (meth)acrylate, stearyl (meth)acrylate, cyclopentyl (meth)acrylate, cyclohexyl (meth)acrylate, 2-methylcyclohexyl (meth)acrylate, dicyclopentanyl (meth)acrylate, dicyclopentenyl (meth)acrylate, dicyclopentanyloxyethyl (meth)acrylate, dicyclopentenyloxyethyl (meth)acrylate, dicyclohexyl (meth)acrylate, isobornyl (meth)acrylate, adamantyl (meth)acrylate, allyl (meth)acrylate, propargyl (meth)acrylate, phenyl (meth)acrylate, naphthyl (meth)acrylate, anthracenyl (meth)acrylate, anthraninonyl (meth)acrylate, piperonyl (meth)acrylate, salicyl (meth)acrylate, furyl (meth)acrylate, furfuryl (meth)acrylate, tetrahydrofuryl (meth)acrylate, tetrahydrofurfuryl (meth)acrylate, pyranyl (meth)acrylate, benzyl (meth)acrylate, phenethyl (meth)acrylate, cresyl (meth)acrylate, glycidyl (meth)acrylate, 3,4-epoxycyclohexylmethyl (meth)acrylate, 3,4-epoxycyclohexylethyl (meth)acrylate, 1,1,1-trifluoroethyl (meth)acrylate, perfluoroethyl (meth)acrylate, perfluoro-n-propyl (meth)acrylate, perfluoroisopropyl (meth)acrylate, heptadecafluorodecyl (meth)acrylate, triphenylmethyl (meth) acrylate, cumyl (meth)acrylate, 3-(N,N-dimethylamino)propyl (meth)acrylate, methoxyethyl (meth)acrylate, ethoxyethyl (meth)acrylate, butoxyethyl (meth)acrylate, 2-cyanoethyl (meth)acrylate, dimethylaminoethyl (meth)acrylate, diethylaminoethyl (meth)acrylate, trimethoxysilylpropyl (meth)acrylate, triethoxysilylpropyl (meth)acrylate, 3-methacryloxypropylmethyldiethoxysilane, 3-methacryloxypropylmethyldimethoxysilane, etc. Note that "(meth)acrylic" means both "acrylic" and "methacrylic". These monomers can be obtained from, Mitsubishi Rayon Co., Ltd. NOF Corporation, Mitsubishi Chemical Corporation, Hitachi Chemical Industries, Ltd., and the like.

The monomer that constitutes an acrylic resin may include an acid group-containing monomer having an acid group, a hydroxy group-containing monomer having a hydroxy group, and an amino group-containing monomer having an amino group. As the acid group-containing monomer, carboxy group-containing monomers each having an ethylenically unsaturated double bond and a carboxy group, such as carboxy group-containing aliphatic monomers may be mentioned. Examples thereof include acrylic acid, methacrylic acid, itaconic acid, fumaric acid, maleic acid, crotonic acid, citraconic acid, maleic anhydride, monomethyl maleate, monobutyl maleate, monomethyl itaconate, monobutyl itaconate, vinyl benzoate, monohydroxyethyl oxalate (meth)acrylate, carboxy group terminus caprolactone-modified (meth)acrylate, etc. The hydroxy group-containing monomer that contains a hydroxy group is not particularly limited as long as it has an unsaturated double bond and a hydroxy group. Examples thereof include: 2-hydroxyethyl (meth)acrylate, 2-hydroxypropyl (meth)acrylate, 3-hydroxyethyl (meth)acrylate, 3-hydroxypropyl (meth)acrylate, 2-hydroxybutyl (meth)acrylate, 4-hydroxybutyl (meth)acrylate, caprolactone-modified hydroxy (meth)acrylate, methyl α-(hydroxymethyl) (meth)acrylate, ethyl α-(hydroxymethyl) (meth)acrylate, n-butyl α-(hydroxymethyl) (meth)acrylate, 1,4-cyclohexanedimethanol mono (meth)acrylate, 4-hydroxybutyl (meth)acrylate, etc. The amino group-containing monomer is not particularly limited as long as it has an unsaturated double bond and an amino group. Examples thereof include acryl amide compounds, such as (meth)acrylamide N-monomethyl (meth)acrylamide, N-monoethyl (meth)acrylamide, N,N-dimethyl (meth)acrylamide, N-n-propyl (meth)acrylamide, N-isopropyl (meth)acrylamide, methylenebis (meth)acrylamide, N-methylol (meth)acrylamide, N-butoxymethyl (meth)acrylamide, dimethylaminoethyl (meth)acrylamide, N,N-dimethylaminopropyl acrylamide, diacetone acrylamide, etc.; nitrogen atom-containing (meth)acrylate compounds, such as dimethylaminoethyl (meth)acrylate, diethylaminoethyl (meth)acrylate, ethylene oxide adduct (meth)acrylate of morpholine, etc.; N-vinylpyrrolidone, N-vinylpyridine, N-vinylimidazole, N-vinylpyrrole, N-vinyloxazolidone, N-vinylsuccinimide, N-vinylmethylcarbamate, N,N-methylvinylacetamide, (meth)acryloyloxyethyltrimethyl ammonium chloride, 2-isopropenyl-2-oxazoline, 2-vinyl-2-oxazoline, (meth)acrylonitrile, etc.

Further, the monomer that constitutes the acrylic resin may include a monomer, other than the above-mentioned (meth)acrylate ester monomers or the like, as required. The other monomers are not particularly limited as long as they can be copolymerized with the above-mentioned (meth)acrylate ester monomers and produce a copolymer having a desired water resistance and solvent resistance, and may be a monofunctional monomer having one ethylenically unsaturated double bond or a polyfunctional monomer having two or more ethylenically unsaturated double bonds. For example, the following may be used: vinyl monomers such as vinyl acetate, vinyl chloride, vinylidene chloride, vinyl fluoride, vinylidene fluoride, N-vinylpyrrolidone, vinylpyridine, N-vinylcarbazole, vinylimidazole, vinyl ethers, vinyl ketones, vinylpyrrolidone, etc.; aromatic vinyl monomers, such as styrene, α-, o-, m-, p-alkyl, nitro, cyano, amide, ester derivatives of styrene, vinyl toluene, chlorstyrene, etc.; olefine monomers such as ethylene, propylene, isopropylene, etc.; diene monomers such as butadiene, chloroprene, etc.; and vinyl cyan compounds such as acrylonitrile, methacrylonitrile, etc; or the like. Further, diacrylate compounds such as polyethylene glycol diacrylate, triethylene glycol diacrylate, 1,3-butylene glycol diacrylate, etc.; triacrylate compounds such as trimethylolpropane triacrylate, trimethylolethane triacrylate, tetramethylol methanetriacrylate, etc.; dimethacrylate compounds such as ethylene glycol dimethacrylate, diethylene glycol dimethacrylate, triethylene glycol dimethacrylate, etc.; trimethacylate compounds such as trimethylolpropane trimethacrylate, trimethylolethane trimethacrylate, etc.; divinylbenzene, and the like. Note that, although the acrylic resin can be formed using these monomers, the form of copolymerization of the monomer is not particularly limited, and may be, for example, a block copolymer, a random copolymer, a graft copolymer, or the like.

The acrylic resin may be either a homopolymer of one type of radically polymerizable monomer or a copolymer in which two or more types of radically polymerizable monomers are selected and used. In particular, the preferred acrylic resin for the ink composition of the present embodiment is a polymer of methyl methacrylate alone or a copolymer of methyl methacrylate and at least one or more compounds selected from the group consisting of butyl methacrylate, ethoxyethyl methacrylate, and benzyl methacrylate.

Such an acrylic resin exhibits good compatibility, particularly, with a solvent in the ink, and can provide an ink composition having storage stability of the ink and image reproducibility. The acrylic resin preferably has a mass average molecular weight of 5,000 or more. Among them, the acrylic resin used in the ink composition of the present embodiment preferably has a mass average molecular weight of 10,000 or more, more preferably 12,000 or more, and most preferably 15,000 or more, from the viewpoint of abrasion resistance and blocking resistance. On the other hand, the acrylic resin used in the ink composition of the present embodiment preferably has a mass average molecular weight of 100,000 or less, more preferably 50,000 or less, more preferably 35,000 or less, and most preferably 30,000 or less, from the viewpoint of high discharge stability during high-speed printing. Further, it is preferable that the acrylic resin used in the ink composition of the present embodiment has a glass transition temperature (Tg) of 80°C or more and 110°C or less. When Tg is within the above range, an effect of obtaining good printing drying property is remarkable. Further, examples of the commercially available (meth)acrylic resin include "Paraloid B99N" (methyl methacrylate/butyl methacrylate copolymer having a Tg of 82°C and a mass average molecular weight of 15,000) and "Paraloid B60" (methyl methacrylate/butyl methacrylate copolymer having a Tg of 75°C and a mass average molecular weight of 50,000), both of which are manufactured by Rohm and Haas Company; and the like.

Examples of the vinyl chloride vinyl acetate-based copolymer resin that can be used in the ink composition of the present embodiment include a vinyl chloride vinyl acetate copolymer, a vinyl chloride/vinyl acetate/maleic acid copolymer, a vinyl chloride/vinyl acetate/vinyl alcohol copolymer, a vinyl chloride/vinyl acetate/hydroxyalkyl acrylate copolymer, and the like, and mixtures thereof. The vinyl chloride vinyl acetate-based copolymer resin described above can be obtained and used from Nissin Chemical Industry Co., Ltd. under trade names such as Solbin C (number average molecular weight (Mn), 31,000), CL (Mn, 25,000), CNL (Mn, 12,000), CLL (Mn, 18,000), C5R (Mn, 27,000), TA2 (Mn, 33,000), TA3 (Mn, 24,000), A (Mn, 30,000), AL (Mn, 22,000), TA5R (Mn, 28,000), M5 (Mn, 32,000).

In the ink composition of the present embodiment, the content (% by mass) of the resin contained in 100% by mass of the ink composition is not particularly limited, but for example, the lower limit is preferably 0.05% by mass or more, and among them, is preferably 0.1% by mass or more, more preferably 0.5% by mass or more, and most preferably 1.0% by mass or more, in the total amount of the ink composition. The upper limit is preferably, for example, within a range of 20.0% by mass or less and above all, more preferably within a range of 15.0% by mass or less in the ink composition.

### [Coloring Material]

The coloring material included in the ink composition of the present embodiment is not particularly limited, and may be a dye-based one or a pigment-based one. It is, however, preferable to use a pigment-based coloring material from the viewpoint of good resistance such as water resistance and light resistance of a printed matter and forming a clear image on the surface of the leather substrate. In the ink composition of the present embodiment, there is no particular limitation on the pigment which can be used, and examples thereof include organic pigments or inorganic pigments used in conventional ink compositions. These may be used alone or in combination of one or more types thereof.

Examples of the organic pigments include organic solid pigments, such as insoluble azo pigments soluble azo pigments derivatives from dyes, phthalocyanine-based organic pigments, quinacridone-based organic pigments, perylene-based organic pigments, dioxazine-based organic pigments, nickel azo-based pigments, isoindolinone-based organic pigments, pyrathrone-based organic pigments, thioindigo-based organic pigments, condensed azo-based organic pigments, benzimidazolone-based organic pigments, quinophthalone-based organic pigments, isoindoline-based organic pigments, quinacridone-based solid solution pigments, perylene-based solid solution pigments; and other pigments, such as carbon black.

Exemplifying the organic pigments in the Color Index (C.I.) numbers, C.I. Pigment Yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, and 214, C.I. Pigment Red 5, 7, 9, 12, 48, 49, 52, 53, 57, 97, 112, 122, 123, 149, 168, 177, 180, 184, 192, 202, 206, 209, 215, 216, 217, 220, 223, 224, 226, 227, 228, 238, 240, and 254, C.I. Pigment Orange 16, 36, 43, 51, 55, 59, 61, 64, and 71, C.I. Pigment Violet 19, 23, 29, 30, 37, 40, and 50, C.I. Pigment Blue 15, 15:1, 15:3, 15:4, 15:6, 16, 22, 60, and 64, C.I. Pigment Green 7, 36, and 58, C.I. Pigment Brown 23, 25, and 26, and C.I. Pigment Black 7, etc. may be mentioned.

Examples of the inorganic pigments which can be used in the ink composition of the present embodiment include titanium oxide, barium sulfate, calcium carbonate, zinc oxide, barium carbonate, silica, talc, clay, synthetic mica, alumina, zinc oxide, lead sulfate, yellow lead, zinc yellow, red oxide (red iron (III) oxide), cadmium red, ultramarine blue, Prussian blue, chromic oxide green, cobalt green, amber, titanium black, synthetic iron black, inorganic solid solution pigments, and the like.

In the ink composition of the present embodiment, the average dispersion particle diameter of the pigment which can be contained may be any one as long as desired color development is allowed, and is not particularly limited. Although it varies depending on the type of pigment used, it is preferable that the number average particle diameter is within a range of 5 nm or more, more preferably 20 nm or more, and most preferably 30 nm or more, from the viewpoint of good dispersibility and dispersion stability of the pigment and obtaining a sufficient tinting strength. When the number average particle diameter is equal to or lower than the above upper limit value, it is possible to suppress the solvent in the ink composition from volatilizing and increasing the viscosity of the ink composition, thereby improving the discharge stability of the ink composition. The number average particle diameter is preferably within a range of 300 nm or less, more preferably 200 nm or less, and most preferably 150 nm or less. When the number average particle diameter is equal to or lower than the above lower limit value, the light resistance may decrease. In this embodiment, the number average particle diameter of the pigment is obtained by measurement using a particle diameter analyzer for concentrated systems (manufactured by Otsuka Electronics Co., Ltd., Model: FPAR-1000) at a measured temperature of 25°C.

In the ink composition of the present embodiment, the content of the pigment which can be used is not particularly limited as long as a desired image can be formed, and can be appropriately adjusted. Specifically, although the content varies depending on the type of pigment, the content is preferably 0.05% by mass or more, and more preferably 0.1% by mass or more, in the total amount of the ink composition. The content is preferably 20% by mass or less, and more preferably 10% by mass or less, in the total amount of the ink composition. When the content of the pigment is within a range of 0.05% by mass or more, or 20% by mass or less, the balance of the dispersion stability and the tinting strength of the pigment can be excellent.

### [Dispersants]

If necessary, a dispersant may be used in the ink composition of the present embodiment. As the dispersant, any dispersant used in the ink composition can be used. As the dispersant, a polymer dispersant may be used. Such dispersants have a main chain composed of a polyester-based chain, polyacrylic-based chain, polyurethane-based chain, polyamine-based chain, polycaprolactone-based chain, or the like, and have a polar group such as an amino group, a carboxy group, a sulfone group, or a hydroxy group as a side chain. As the polyacrylic dispersant, for example, Disperbyk-2000 2001, 2008, 2009, 2010, 2020, 2020N, 2022, 2025, 2050, 2070, 2095, 2150, 2151, 2155, 2163, 2164, BYKJET-9130 9131, 9132, 9133, or 9151 (manufactured by BYK-Chemie GmbH) is used. As the polycaprolactone-based dispersant, for example, AJISPER PB821, PB822, or PB881 (manufactured by Ajinomoto Fine Techno Co., Ltd.) is used. Preferred dispersants are polyester-based dispersants, and for example, the following can be used: Hinoact KF-1000, T-6000, T-7000, T-8000, T-8000E, and T-9050 (manufactured by Kawaken Fine Chemicals Co., Ltd.), Solsperse 20000, 24000, 32000, 32500, 32550, 32600, 33000, 33500, 34000, 35200, 36000, 37500, 39000, and 71000 (manufactured by Lubrizol Corporation), Flowlen DOPA-15BHFS, 17HF, 22, G-700, 900, NC-500, and GW-1500 (manufactured by Kyoeisha Chemical Co., Ltd.), and Efka4310, 4320, 4330, 4401, 4402, 4403N, 4570, 7411, 7477, and 7700 (manufactured by BASF Corporation), or mixtures thereof.

### [Surfactants]

To the ink composition of the present embodiment, a surfactant may be added for the purpose of suppressing volatilization or solidification of the ink composition in an instrument such as a nozzle portion or a tube, for the purpose of redissolution when the ink composition is solidified, or for the purpose of reducing the surface tension and improving wettability with the recording medium. For example, the following may be used: polyoxyalkylene alkyl ethers such as Nonion P-208, P-210, P-213, E-202S, E-205S, E-215, K-204, K-220, S-207, S-215, A-10R, A-13P, NC-203, and NC-207 (manufactured by NOF Corporation), Emulgen 106, 108, 707, 709, A-90, and A-60 (manufactured by Kao Corporation), Flowlen G-70, D-90 and TG-740W (manufactured by Kyoeisha Chemicals Co., Ltd.), Poem J-0081HV (manufactured by Riken Vitamin Co., Ltd.), Adekatol NP-620, NP-650, NP-660, NP-675, NP-683, and NP-686, Adekacol CS-141E and TS-230E (manufactured by Adeka Corporation), and Solgen 30V, 40, TW-20, and TW-80, and Noigen CX-100 (manufactured by DKS Corporation), and the like. As fluorinated surfactants, it is preferred to use a fluorine-modified polymer, and examples thereof include BYK-340 (manufactured by BYK-Chemie Japan Co., Ltd.), etc. As silicone-based surfactants, it is preferable to use a polyester-modified silicone or a polyether-modified silicone and examples thereof include BYK-347 and 348, BYK-UV3500, 3510, 3530, and 3570 (all of which are manufactured by BYK-Chemie Japan Co., Ltd.). Examples of acetylene glycol-based surfactants include Surfynol^{®} 82, 104, 465, 485, and TG (all of which are manufactured by Air Products Japan), Olfine^{®} STG and E1010 (both of which are manufactured by Nissin Chemical Co., Ltd.), and the like.

The surfactant is not limited to the above, and any of anionic, cationic, amphoteric and nonionic surfactants can be used, and may be appropriately selected according to the purpose of addition. Further, if necessary, the ink composition of the present embodiment may further comprise other components.

### <Leather Substrates>

Leather substrates are a substrate such as natural leather or synthetic leather. Examples of the natural leather include conventionally known leathers, including leathers of mammals such as cattle, horses, pigs, goats, sheep, deer, and kangaroos, leathers of birds such as ostriches, leathers of reptiles such as turtles, lizards, snakes, and crocodiles, and leathers of fish such as sharks and rays. In addition, conventionally known tanning treatment may be applied to prevent spoilage and deterioration of these leathers.

As the synthetic leather (artificial leather), leather with a finish resembling leather, which is obtained by the following manner may be mentioned: a base fabric such as knit, woven fabric, or nonwoven fabric, is made of a conventionally known a resin fiber such as nylon, polyester, or rayon; a solution of vinyl chloride, nylon, or polyurethane is applied to the base fabric or the base fabric is impregnated with the solution; and embossing or wrinkling is performed to impart the leather with a finish resembling leather.

### [Recording Method using Ink Composition (not covered by the present claims)]

A recording method (not covered by the present claims) using the ink composition of the above embodiment (hereinafter, sometimes simply referred to as a recording method using the ink composition) is not particularly limited. For example, a spray method, a coater method, an ink jet method, a gravure method, a flexographic method, or the like can be mentioned. Among them, it is preferable to discharge or apply the ink composition to the surface of a leather substrate by the ink jet method. In the case of the ink jet method, it is easy to apply the ink composition to any place on the leather substrate or to apply the ink composition to the entire surface of the leather substrate.

The ink jet recording method in which an ink is discharged onto a surface of a leather substrate by an ink jet method is preferably an ink jet recording method in which recording is performed on a recording medium using an ink jet recording instrument provided with a cleaning system for an ink jet head. By using the ink composition of the present embodiment, it is possible to achieve an ink jet recording method in which member suitability of the ink jet head and ink jet recording instrument is good and a maintenance property is excellent. Further, since the ink composition of the present embodiment has good discharge stability, drying property of a printed matter, and blocking resistance, productivity of the printed matter using the ink jet recording method can be improved.

The ink jet recording method (not covered by the present claims) is applicable to any of conventionally known ink jet recording instruments having a cleaning system for the ink jet head. Among them, the present invention can be preferably applied to an ink jet recording instrument including a cleaning system having at least a configuration in which an ink composition remaining or being clogged in a nozzle of the ink jet head is sucked. Further, the present invention is preferably used in an ink jet recording instrument provided with a cleaning system in which a flexible liquid feeding tube made of an elastomer, etc. is used in a liquid feeding pump connection or the like.

### [Method for producing Printed Matter using the Ink Composition (not covered by the present claims)]

It is also possible to manufacture a printed matter using the ink jet recording method described above (not covered by the present claims). In this method for producing a printed matter, the ink composition according to the present embodiment is used, whereby an ink film having a higher abrasion resistance or flexibility can be formed, whereby a clearer image can be formed on a leather substrate.

### [Printed Matter (not covered by the present claims)]

As long as a printed matter comprises a leather substrate and an ink film formed by the above ink composition on the surface of the leather substrate, it is possible to form an ink film having abrasion resistance and flexibility, and to form a clearer image on the leather substrate. Further, it is unnecessary to form an undercoat layer on the surface of the leather substrate and it is also possible to form this ink film on the surface of the leather substrate, resulting in high productivity. In addition, since this ink film can be formed by directly discharging the ink composition onto the surface of a leather substrate using an ink jet method, productivity is extremely high.

### EXAMPLES

Hereinafter, the present invention will be described in more detail by way of the Examples, but the present invention is not limited in any way to these descriptions.

The ink compositions of Reference Example 1, Examples 2 to 7 and Comparative Example 1 and 2 were prepared using a coloring material (pigment), a resin (acrylic resin), and a solvent represented by the following general formula (1) as described below.

### 1. Preparation of Resins

### (Resin A)

To 300 g of DEGDEE-A kept at 100°C, a mixture of 200 g of methyl methacrylate and 6.3 g of t-butylperoxy-2-ethyl hexanoate was added dropwise over a period of 1.5 hours. After completion of the dropwise addition, the mixture was allowed to react for 2 hours at 100°C, and then cooled to obtain a colorless and transparent polymer solution of methyl methacrylate (solid content: 39.5%). Tg of the obtained polymer (denoted as resin A in the Table) was 105°C. When GPC measurement was performed, the mass average molecular weight was 18,000.

### (Resin B)

A colorless and transparent copolymer solution of methyl methacrylate and n-butyl methacrylate (solid content: 39.8%) was obtained by the same synthesis method as in the acrylic resin 1, using a mixture of 180 g of methyl methacrylate, 20 g of n-butyl methacrylate, and 3.6 g of t-butylperoxy-2-ethyl hexanoate. The Tg of the obtained polymer (denoted as acrylic resin 2 in the Table) was 94°C, and the mass average molecular weight was 30,000.

### 2. Preparation of Ink Compositions

Ink compositions were prepared so as to have composition ratios (parts by mass) of Table 1.

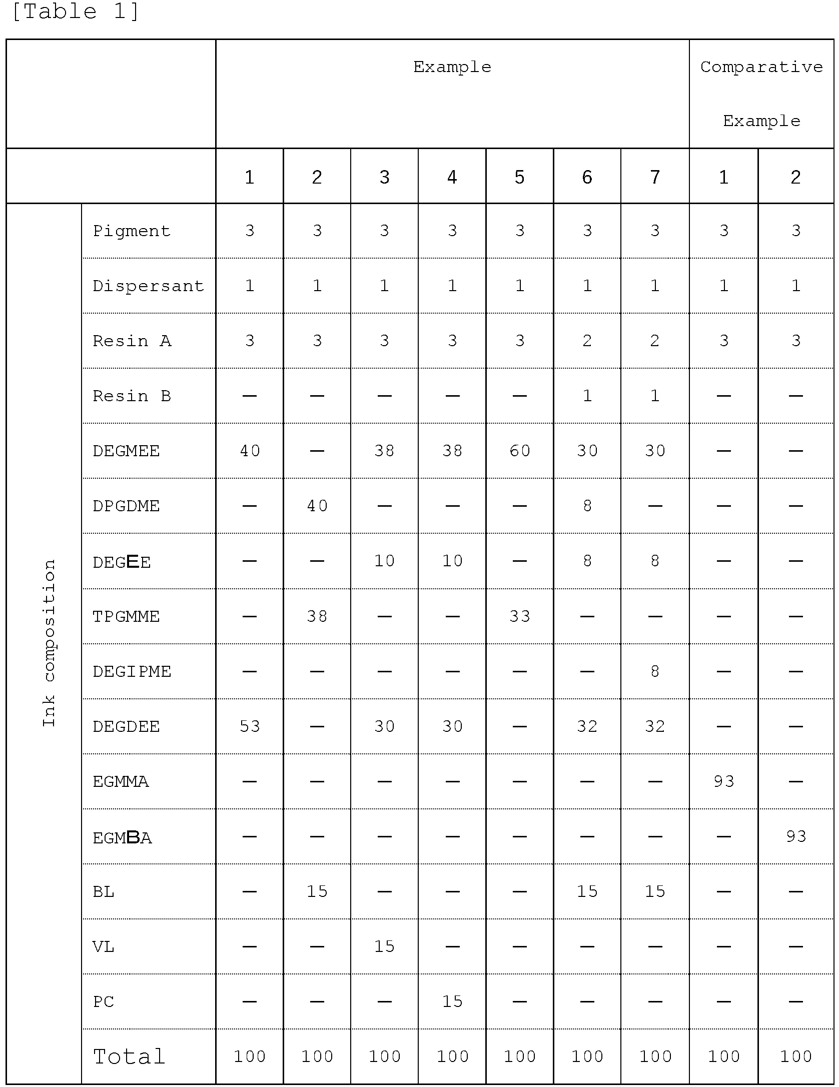

In Table 1, "DEGMEE" is a solvent represented by the general formula (1) and is diethylene glycol methyl ethyl ether (flash point: 64°C). In Table 1, "DPGDME" is a solvent represented by the general formula (1) and is dipropylene glycol dimethyl ether (flash point: 56°C). In Table 1, "DEGEE" is a solvent represented by the general formula (1) and is diethylene glycol monoethyl ether (flash point: 93°C). In Table 1, "TPGMME" is a solvent represented by the general formula (1) and is a tripropylene glycol monomethyl ether (flash point: 118°C). In Table 1, "DEGIPME" is a solvent represented by the general formula (1) and is diethylene glycol isopropyl methyl ether (flash point: 82°C). In Table 1, "DEGDEE" is a solvent represented by the general formula (1) and is diethylene glycol diethyl ether (flash point: 71°C). In Table 1, "EGMMA" is ethylene glycol monomethyl ether acetate (flash point: 51°C). In Table 1, "EGMBA" is ethylene glycol monobutyl ether acetate (flash point: 83°C). In Table 1, "BL" is γ-butyrolactone. In Table 1, "VL" is a γ-valerolactone. In Table 1, "PC" is propylene carbonate.

### [Comparative Example 3]

An ink composition of Comparative Example 3 (so-called ultraviolet curable ink composition) was obtained, using 15.0% by mass of SR489 (tridecyl acrylate; Sartomer), 40.0% by mass of SR506 (isobornyl acrylate; Sartomer), 30.0% by mass of DPHA (dipentaerythritol hexaacrylate; Sartomer), 7.0% by mass of CN981 (aliphatic urethane acrylate oligomer; Sartomer), 4.0% by mass of Irgacure 184 (initiator; BASF Corporation), 3.0% by mass of C.I. Pigment Red 122, and 1.0% by mass of Flowlen DOPA-33 (dispersant; Kyoeisha Chemical Co., Ltd.).

### <Evaluation >

Each of the ink compositions of the above Examples and Comparative Examples was printed on the surface of a leather substrate (Cordley manufactured by Teijin Cordley Limited, and Clarino manufactured by Kuraray Co., Ltd.) by ink jet, and the ink composition was dried to prepare a printed matter on which the ink film was formed, and each evaluation was performed.

### [Flexibility Test]

The printed matters were subjected to a flexibility test according to JIS K6545 to confirm whether or not cracking occurred in the ink films (in the Table, denoted as "flexibility").

### (Evaluation Criteria)

Circle symbol o: No visible cracking occurred in the ink film. Cross symbol x: A portion of the ink film was cut, or many cracks were generated in the ink film, so that the ink film could not withstand use.

### [Odor Test]

Five subjects smelled a freshly prepared printed matter and sensory evaluation was made based on the following criteria. When more than half the subjects evaluated a printed matter as good, the printed matter was evaluated as good (indicated by circle symbol o) and when more than half the subjects evaluated a printed matter as poor, the printed matter was evaluated as poor (indicated by cross symbol x (in the Table, denoted as "odor").

### (Evaluation Criteria)

Circle symbol o: No unpleasant odor. Cross symbol ×: There is an unpleasant odor.

### [Abrasion Resistance Test]

Printed matters were rubbed with a test fabric piece at a load of 200 g by 50 reciprocations, and the abrasion resistance was evaluated visually.
(In the Table, denoted as "abrasion resistance")

### (Evaluation Criteria)

Circle symbol o: The ink film did not peel off. Cross symbol ×: The ink film peeled off and the leather substrate was exposed.

### [Texture Test]

Texture was confirmed for freshly prepared printed matters. Specifically, the texture (gloss and unevenness) of the printed portion and that of the substrate surface were compared and evaluated by visual observation (in the Table, denoted as "texture").

### (Evaluation Criteria)

Circle symbol o: There is no difference in the texture between the printed portion and the substrate. Cross symbol ×: There is a considerable difference in the texture between the printed portion and the substrate.

**[Table 2]**

| | Example | | | | | | | Comparative Example | | |
|---|---|---|---|---|---|---|---|---|---|---|
| | 1 | 2 | 3 | 4 | 5 | 6 | 7 | 1 | 2 | 3 |
| Flexibility | ○ | ○ | ○ | ○ | ○ | ○ | ○ | ○ | ○ | × |
| Odor | ○ | ○ | ○ | ○ | ○ | ○ | ○ | × | × | × |
| Texture | ○ | ○ | ○ | ○ | ○ | ○ | ○ | × | × | × |
| Abrasion resistance | ○ | ○ | ○ | ○ | ○ | ○ | ○ | ○ | ○ | × |

From Table 2, it was confirmed that the ink compositions of the Examples could form ink films having a high abrasion resistance and flexibility and also having good texture. Furthermore, it can be seen that the ink compositions of the Examples were odorless.

On the other hand, it can be seen that the ink compositions of Comparative Examples 1 and 2, which did not include the solvent represented by the general formula (1), had odor, and the ink films formed by these ink compositions did not have good texture. It is considered that ethylene glycol monoalkyl ether acetate has too strong an attack property to the leather substrate, whereby the texture of the leather substrate was changed. Further, it can be seen that the ink film formed by the composition of Comparative Example 3 was further inferior in the flexibility and texture, because the ink composition was an ultraviolet curable ink and had an odor, so that the object of the present invention could not be achieved.

## Claims

1. Use of an ink composition to discharge the ink composition onto a surface of a leather substrate by an ink jet method,
the ink composition comprising a coloring material, a resin, and an organic solvent,
and comprising no water,
wherein the organic solvent is represented by the following general formula (1):
R₁-(OR₂)ₙ-O-R₃ (1)
wherein
n: an integer of 1 or more and 4 or less,
R₁: an optionally branched alkyl group having 1 or more and 8 or less carbon atoms,
R₂: an optionally branched alkylene group having 1 or more and 4 or less carbon atoms, and
R₃: hydrogen or an optionally branched alkyl group having 1 or more and 4 or less carbon atoms, and
wherein the solvent represented by the general formula (1) comprises
a first organic solvent having a flash point of 70°C or less and
a second organic solvent having a flash point of 90°C or more.

2. Use of the ink composition according to claim 1, wherein the organic solvent comprises a cyclic ester solvent.

## Patentansprüche

1. Verwendung einer Tintenzusammensetzung zum Aufbringen der Tintenzusammensetzung auf eine Oberfläche eines Ledersubstrats durch ein Tintenstrahlverfahren,
wobei die Tintenzusammensetzung ein Färbematerial, ein Harz und ein organisches Lösungsmittel umfasst
und kein Wasser umfasst,
wobei das organische Lösungsmittel durch die folgende allgemeine Formel (1) dargestellt ist:
R₁-(OR₂)ₙ-O-R₃ (1)
wobei
n: eine ganze Zahl von 1 oder mehr und 4 oder weniger,
R₁: eine optional verzweigte Alkylgruppe mit 1 oder mehr und 8 oder weniger Kohlenstoffatomen,
R₂: eine optional verzweigte Alkylengruppe mit 1 oder mehr und 4 oder weniger Kohlenstoffatomen, und
R₃: Wasserstoff oder eine optional verzweigte Alkylgruppe mit 1 oder mehr und 4 oder weniger Kohlenstoffatomen, und
wobei das durch die allgemeine Formel (1) dargestellte Lösungsmittel umfasst:
ein erstes organisches Lösungsmittel mit einem Flammpunkt von 70 °C oder weniger und
ein zweites organisches Lösungsmittel mit einem Flammpunkt von 90 °C oder mehr.

2. Verwendung der Tintenzusammensetzung gemäß Anspruch 1, wobei das organische Lösungsmittel ein cyclisches Esterlösungsmittel umfasst.

## Revendications

1. Utilisation d'une composition d'encre pour décharger la composition d'encre sur une surface d'un substrat en cuir par un procédé de jet d'encre,
la composition d'encre comprenant un matériau colorant, une résine et un solvant organique,
et ne comprenant pas d'eau,
dans laquelle le solvant organique est représenté par la formule générale (1) suivante :
R₁-(OR₂)ₙ-O-R₃ (1)
dans laquelle
n : un entier égal à 1 ou plus et 4 ou moins,
R₁ : un groupe alkyle éventuellement ramifié présentant 1 ou plus et 8 ou moins atomes de carbone,
R₂ : un groupe alkylène éventuellement ramifié présentant 1 ou plus et 4 ou moins atomes de carbone, et
R₃ : l'hydrogène ou un groupe alkyle éventuellement ramifié présentant 1 ou plus et 4 ou moins atomes de carbone, et
dans laquelle le solvant représenté par la formule générale (1) comprend
un premier solvant organique présentant un point d'éclair de 70 °C ou moins et
un second solvant organique présentant un point d'éclair de 90 °C ou plus.

2. Utilisation de la composition d'encre selon la revendication 1, dans laquelle le solvant organique comprend un solvant ester cyclique.
